# Europäisches Patentamt

## European Patent Office

## Office européen des brevets

(11) Veröffentlichungsnummer: **0 426 848 A1**

(12)
# EUROPÄISCHE PATENTANMELDUNG
## veröffentlicht nach Art. 158 Abs. 3 EPÜ

(21) Anmeldenummer: 89909260.5

(22) Anmeldetag: 28.04.89

(86) Internationale Anmeldenummer:
PCT/SU89/00118

(87) Internationale Veröffentlichungsnummer:
WO 90/13526 (15.11.90 90/26)

(51) Int. Cl.⁵: **C04B 35/66, C04B 35/68**

(43) Veröffentlichungstag der Anmeldung:
**15.05.91 Patentblatt 91/20**

(84) Benannte Vertragsstaaten:
**AT BE DE FR GB IT NL SE**

(71) Anmelder: **KAZAKHSKY MEZHOTRASLEVOI NAUCHNO-TEKHNICHESKY TSENTR SVS**
ul. Kirova, 172
Alma-Ata, 480012(SU)

Anmelder: **INSTITUT STRUKTURNOI MAKROKINETIKI AKADEMII NAUK SSSR**
Moskovskaya oblast
Poselok Chernogolovka 142432(SU)

(72) Erfinder: **KSANDOPULO, Georgy Ivanovich**
ul. Mira, 168-34
Alma-Ata, 480035(SU)
Erfinder: **MERZHANOV, Alexandr Grigorievich**
pos. Chernogolovka, 3-2
Moskovskaya obl., 142432(SU)
Erfinder: **ISMAILOV, Marat Bazaraly uly**
6 mikroraion, 26-52
Alma-Ata, 480035(SU)
Erfinder: **BOROVINSKAYA, Inna Petrovna**
ul. Tretya, 3-2 pos. Chernogolovka

Moskovskaya obl., 142432(SU)
Erfinder: **LEONOV, Alexandr Nikolaevich**
ul. Buzurbaeva, 21-54
Alma-Ata, 480002(SU)
Erfinder: **NERSESIAN, Mikael Davidovich**
Institutsky pr., 4-120 pos. Chernogolovka
Moskovskaya obl., 142432(SU)
Erfinder: **SATBAEV, Baimakhan Nurlybaevich**
ul. Timiryazeva, 44-19
Alma-Ata, 480121(SU)
Erfinder: **SEIDAEV, Abdurakhim Rakhmankulovich**
6 mikroraion, 17a-43
Alma-Ata, 480113(SU)
Erfinder: **UMARBEKOV, Nurlan-bek Sagadibekovich**
ul. Morisa Toreza, 152/1-61
Alma-Ata, 480033(SU)
Erfinder: **TARAEV, Alexandr Viktorovich**
mikroraion Ainabulak-3, 116-48
Alma-Ata, 480125(SU)

(74) Vertreter: **Patentanwälte Zellentin & Partner**
Zweibrückenstrasse 15
W-8000 München 2(DE)

(54) **FEUERFESTES MATERIAL.**

(57) Die Erfindung bezieht sich auf das Gebiet der Herstellung eines feuerfesten Materials durch Wärmebehandlung im Brennbetrieb eines exothermen Gemenges folgender Zusammensetzung (Masse%):

EP 0 426 848 A1

| Reduktionsmittel | 6 bis 20 |
| Oxydationsmittel | 20 bis 70 |
| Füllmittel | bis zur Auffüllung auf 100. |

Als Reduktionsmittel dient ein Metall, gewählt aus der Gruppe: Magnesium, Aluminium, Zirkonium, Silizium, Titan oder ihre Legierungen;

als Oxydationsmittel, einzeln oder im Gemisch genommen dient Rohdolomit, Chromit, Sulfat, Karbonat eines Metalls, gewählt aus der Gruppe: Magnesium, Kalzium, Strontium, Barium, Zink, Aluminium;

als Füllmittel, einzeln oder im Gemisch genommen, dient Periklas, Chromit, feuerfester Bruch, feuerfestes Oxid, kohlenstoffhaltige Komponente, Karbid, Nitrid eines Metalls, gewählt aus der Gruppe: Aluminium, Silizium, Titan.

Es wird empfohlen, das Gemenge in Verbindung mit Wasser zu verwenden.

## FEUERFESTES MATERIAL

Die vorliegende Erfindung bezieht sich auf ein feuerfestes Material, das für die Auskleidung von Öfen und Wärmeaggregaten geeignet ist.

Die Hauptkriterien der Qualität von feuerfesten Materialien sind Feuerfestigkeit, Festigkeit, Porosität und chemische Beständigkeit.

Stand der Technik

Bekannt sind gegenwärtig feuerfeste Materialien, die als Auskleidung in Form einer Fuge oder eines Überzuges verwendet werden, die im Sinterverfahren aus einem hochschmelzenden Füllmittel und aus einem Bindemittel, genommen in einer Menge vor 1 bis 30 Masse%, hergestellt werden.

Als feuerfestes Füllmittel verwendet man Periklas, Chromit, Tonerde und Quarzit und als Bindemittel Lösungen von Sulfat, Chlorid, Phosphat eines Metalls, gewählt aus der Gruppe: Al, Mg, Ca und Cr.

Eine feuerfeste Masse aus Füll- und Bindemittel wird auf die Innenoberfläche eines Ofens aufgetragen, bei dessen Betrieb bei einer Temperatur von 1200 bis 1600° C die Bildung der Auskleidung infolge der Zersetzung des Bindemittels und der Sinterung der Füllmittelkörner erfolgt, das heisst die Bildung einer keramischen Bindung zwischen ihnen. Da die Geschwindigkeit der Zersetzung des Bindemittels wesentlich die Geschwindigkeit der Ausbildung einer keramischen Bindung übersteigt, ist die Struktur des feuerfesten Materials, das die Auskleidung bildet, in der Auskleidungsstärke inhomogen.

Ein derartiges feuerfestes Material zeichnet sich durch keine hohen Kennziffern der physikalisch-mechanischen Eingenschaften, der Feuerfestigkeit und der chemischen Beständigkeit unter Betriebsbedingungen aus, was wesentlich die Standzeiten einer solchen fugenlosen Auskleidung verringert. Sie übertrifft jedoch in ihrer Standzeit die Auskleidung, die aus Steinen und Blöcken ausgemauert wird, da der Engpass der letzteren die Fuge ist.

Zur Verbesserung der Festigkeitseigenschaften des feuerfesten Materials und demzufolge auch der Qualität der jeweiligen Auskleidung wird in die obengenannte feuerfeste Masse bis 2,5 Masse% eines aktiven Metalls, meistens Aluminium , Magnesium oder Zirkonium eingeführt. Das Metall oxydiert bei hohen Temperaturen und bewirkt die Ausbildung einer festeren keramischen Bindung.

Die Erhöhung der chemischen Beständigkeit des feuerfesten Materials kann durch die Einführung von Kohlenstoff in die feuerfeste Masse gewährleistet werden. Da die Adhäsion des Kohlenstoffs mit dem Bindemittel fehlt, bestehen grosse technologische Schwierigkeiten bei der Ausmauerung einer Auskleidung.

Bekannt ist ein feuerfestes Material, das im Sinterverfahren aus einer feuerfesten Masse folgender Zusammensetzung hergestellt wird: 50 bis 93 Masse% Quarzit, 3 bis 15 Masse% feuerfester Ton, von 2 bis 12 Masse% Magnesiumsulfat und 1 bis 25 Masse% Ferromangan. (GB, A, 1453309). Infolge eines niedrigen Gehaltes an reduziertem Eisen und an Ton in diesem Material übersteigt seine Feuerfestigkeit nicht 1560° C.

Bekannt ist ein feuerfestes Material (GB, A, 2110200) aus einem exothermen Gemenge, das als Reduktionsmittel ein Gemisch aus Aluminium und Silizium die maximale Teilchengrösse beträgt 100 $\mu$m, vorzugsweise 50 $\mu$m ) und als feuerfestes Füllmittel ein Oxid beziehungsweise mehrere Oxide aus der Reihe: $SiO_2$, $ZrO_2$, $Al_2O_3$, MgO, Sillimanit, Mullit, Zirkon enthält, wobei die Menge des Aluminiums nicht 12 Masse% übersteigt. Die Wärmebehandlung der Masse erfolgt beim Brennen der Metalle in einem Sauerstoffstrahl,dabei schmelzen die Oxide und kleben beim Auftreffen auf die Auskleidungsoberfläche leicht an und bilden eine Schutzschicht.

Ein solches feuerfestes Material gewährleistet infolge seiner erhöhten Porosität und geringen Adhäsion zur Auskleidung einen zeitweiligen Schutz für dieselbe und kann lediglich für ihre operative Ausbesserung verwendet werden.

Offenbarung der Erfindung

Die Erfindung liegt die Aufgabe zugrunde, ein feuerfestes Material durch qualitative und quantitative Auswahl der Komponenten eines exothermen Gemenges sowie Bedingungen zur Herstellung dieses Materials zu entwickeln, die ihm hohe Kennwerte der physikalisch-mechanischen Eigenschaften, der Feuerfestigkeit und der chemischen Beständigkeit beim Betrieb als Elemente einer feuerfesten Auskleidung gewährleisten.

EP 0 426 848 A1

Die Aufgabe wird dadurch gelöst, dass ein feuerfestes Material vorgeschlagen wird, in dem man erfindungsgemäss, ein exothermes Gemenge der Wärmebehandlung im Brennbetrieb aussetzt, das ein Reduktionsmittel aus einem Metall, gewählt aus der Gruppe: Magnesium, Aluminium, Zirkonium, Silizium, Titan oder ihre Legierungen;

ein Oxydationsmittel aus, einzeln oder im Gemisch genommen,: Rohdolomit, Chromit, Sulfat und/oder Karbonat eines Metalls, gewählt aus der Gruppe: Magnesium, Kalzium, Strontium, Barium, Zink und Aluminium;

ein feuerfestes Füllmittel aus, einzeln oder im Gemisch genommen,: Periklas, Chromit oder feuerfestes Bruchmaterial ein feuerfestes Oxid, eine kohlenstoffhaltige Komponente, Karbide und/oder Nitrid eines Metalls, gewählt aus der Gruppe: Aluminium, Silizium, Titan, enthält bei folgendem Verhältnis der Komponenten (Masse%):

```
Reduktionsmittel              6 bis 20
Oxydationsmittel             20 bis 70
   feuerfestes Füllmittel  bis zur Auffüllung auf 100.
```

Ein feuerfestes Material (Feuerfeststoff), hergestellt unter Brennbetrieb aus einem exothermen Gemenge der genannten Zusammensetzung, ist in seinem Volumen homogen, weist eine Feuerfestigkeit von 1660 bis 2600° C, eine Druckfestigkeit bis zu 90 MPa, eine Porosität von 16 - 50%, eine Dichte von 2,5 bis 3,8 $g/cm^3$, einen thermischen Dehnungskoeffizienten von 0,4 bis $1,5 \cdot 10^{-7} K^{-1}$ auf und es zeichnet sich durch eine hohe Wärmebeständigkeit, Verschlackungsbeständigkeit und wärmeisolierende Eigenschaften aus. Es wird empfohlen, dieses Material als Elemente einer feuerfesten Auskleidung in Form einer Verbindungsfuge, einer feuerfesten Isoliermasse, einer Gussmasse, eines Schutzüberzuges und für Steine zu verwenden.

Die Wahl solcher Metalle wie Magnesium, Aluminium, Zirkonium, Silizium, Titan oder ihre Legierungen als Reduktionsmittel ist auf ihre Aktivität sowie darauf zurückzuführen, dass sie bei Oxydation Hochtemperaturoxide (feuerfeste Oxide) bilden.

Die Wahl des Oxydationsmittel wurde von uns ausgehend davon vorgenommen, dass dem exothermen Gemenge die Fähigkeit verliehen wird, beim Initiieren zu brennen, was auch gleichzeitig die Oxydation aller Komponenten unter Brennbetrieb sowie die Erreichung einer schnellen Wärmehomogenisierung in dem gesamten Volumen des Ausgangsgemisches gewährleistet. Bei Verwendung von Rohdolomit ( 93 bis 95 Masse% $CaCO_3$, $MgCO_3$, übrige Beimengungen in Form von $SiO_2$, $Al_2O_3$, $MgO$) und Karbonat eines Metalls, gewählt aus der Gruppe: Magnesium, Kalzium, Strontium, Barium, Zink und Aluminium, verläuft ihr Zusammenwirken mit dem Reduktionsmittel nach folgender Reaktion, bei der eine grosse Wärmeentwicklung erfolgt:

$4Al + 3MgCO_3 \rightarrow 2(MgO \cdot Al_2O_3) + MgO + 3C$.

Als Verbrennungsprodukte treten Hochtemperaturphasen von $MgO \cdot Al_2O_3$, $MgO$, $S$ auf, deren Schmelzpunkt nicht unter 2100° C liegt.

Die Umsetzung eines beliebigen der aufgezählten Karbonate mit einem der genannten Metalle als Reduktionsmittel verläuft gemäss der angeführten Reaktion.

Es ist wichtig hervorzuheben, dass eines der Verbrennungsprodukte Kohlenstoff ist, dessen Vorhandensein in einem feuerfesten Material für die chemischen Beständigkeit einer Auskleidung, die aus diesem Material ausgeführt wird, in einem Schlacke- und Metallbad äusserst günstig ist.

Es wird vorgeschlagen, als Oxydationsmittel Chromit zu verwenden. Üblicherweise wird die chemische Formel von Chromit in folgender Form ausgedrückt:

$(Mg, Fe)O \cdot (Cr, Al)_2O_3$.

Offensichtlich enthält das Chromit die zur Umsetzung mit einem aktiven Metall fähigen Oxide $FeO$ und $Cr_2O_3$. Als Verbrennungsprodukte des Chromits, beispielsweise mit Aluminium, treten, wie die Röntgen-Phasen-Analyse zeigt, zusammengesetzte Oxide Mg, Fe, Cr, Al sowie intermetallische Verbindungen Fe, Cr, Al auf. Die Menge des reduzierten Metalls (intermetallische Verbindungen) ist unwesentlich. Die Feuerfestigkeit des hergestellten Feuerfeststoffes liegt nicht unter 1900° C.

Beim Vorhandensein eines aktiveren Oxydationsmittels, beispielsweise von Metallsulfaten beziehungsweise -karbonaten, spielt das Chromit die Rolle eines inerten Füllstoffes.

Die Wahl der Sulfate der genannten Metalle als Oxidationsmittel ist darauf zurückzuführen, dass sie
- die $SO_3$-Gruppe zur Oxydation von Metallen leicht abgeben,
- feuerfeste Oxide bilden,
- wasserlöslich sind und zusätzlich als Bindemittel dienen können.

4

Die Reaktion zwischen Sulfat und dem aktiven Metall verläuft nach dem Schema:

$$MgSO_4 + 2Al \rightarrow MgO \cdot Al_2O_3 + 1/2\, S_2.$$

Die Reaktion verläuft unter grosser Wärmeentwicklung; als Verbrennungsprodukt tritt Edelspinell $MgO \cdot Al_2O_3$, der durch seine feuerfesten Eigenschaften bekannt ist, und gasförmiger Schwefel auf.

Die Umsetzung eines beliebigen der aufgezählten Sulfate mit einem der genannten Metalle als Reduktionsmittel verläuft gemäss der oben angeführten Reaktion.

Der gasförmige Schwefel kann die Porosität des Feuerfeststoffes erhöhen, deshalb ist es für die Steigerung seiner Dichte und Festigkeit zweckmässig, in das exotherme Gemenge zusätzlich als Oxydationsmittel Eisen(III)oxid oder Alumosilikat, das gesintertes $Al_2O_3$ und $SiO_2$ darstellt, bei ihrem Massenverhältnis von 0,35 bis 0,8 einzuführen. Das Eisenoxid zusammen mit dem Reduktionsmittel und dem Schwefel setzt sich gemäss folgenden Reaktionen um:

$$Fe_2O_3 + 2Al \rightarrow 2Fe + Al_2O_3$$

$$Fe + S_2 \rightarrow FeS_2.$$

Das Vorhandensein von feuerfestem $Al_2O_3$ und von Sulfid $FeS_2$ mit einem Schmelzpunkt von 1900°C verbessert wesentlich die Qualität des herzustellenden feuerfesten Materials.

Bei der Einführung von Alumosilikat in das exotherme Gemenge setzt sich das darin enthaltene $SiO_2$ mit dem Reduktionsmittel gemäss folgender Reaktion um:

$$3SiO_2 + 4AL \rightarrow 3Si + 2Al_2O_3.$$

Wenn in dem genannten Gemenge Kohlenstoff vorhanden ist, beispielweise, wenn das Oxydationsmittel $MgCO_3$ ist, erfolgt die Bildung von Siliziumkarbid, das einen Schmelzpunkt oberhalb von 2000°C hat, und beim Vorhandensein von gasförmigem Schwefel erfolgt die Bildung von feuerfestem Siliziumsulfid. Der Mechanismus der Umsetzung von $Fe_2O_3$ und Alumosilikat mit einem beliebigen der Metalle als Reduktionsmittel ist analog dem obenbeschriebenen.

Festgestellt wurde, dass die Verwendung eines Doppelgemenges, Reduktionsmittel-Oxydationsmittel, bei einer hohen Geschwindig eit des Brennens eine hohe Temperatur (über 3000°C) gibt, wobei die Verbrennungsprodukte nicht nur schmelzen, sondern auch in manchen Fällen sich vergasen lassen. Für die Senkung der Temperatur des Brennens werden (als Verdünnungsmittel) feuerfeste Füllmittel wie Periklas, Chromit, feuerfester Bruch, feuerfestes Oxid, kohlenstoffhaltige Komponente, Karbid und Nitrid eines Metalls eingeführt, gewählt aus der Gruppe: Aluminium, Silizium, Titan.

Periklas ist ein Produkt des Brennens von Magnesiterz $MgCO_3$. Ausser der Hauptphase MgO enthält er auch eine Reihe von Beimengungen an $Al_2O_3$, $SiO_2$ und $Fe_2O_3$ in unwesentlichen Mengen.

Feuerfester Bruch stellt einen vorher schon gebrauchten Feuerfeststoff auf der Grundlage von Periklas und Chromit, Alumosilikat -Feuerfeststoff und Karborund-Feuerfeststoff dar.

Ein feuerfestes Oxid ist ein Oxid, das einen Schmelzpunkt oberhalb von 1700°C hat, gewählt aus der Gruppe MgO, $Al_2O_3$, $SiO_2$, $ZrO_2$, $Cr_2O_3$, SrO. Als kohlenstoffhaltige Komponente kann Russ, Graphit, Abfall der Graphitproduktion, Koks und kohlenstoffreicher Teer dienen. Die Menge des genannten feuerfesten Füllmittels wird experimentell gewählt, ausgehend von den Bedingungen eines stabilen Brennens und der Qualität des herzustellenden Feuerfeststoffes.

Das Verhältnis zwischen den drei Hauptkomponenten des exothermen Gemenges hängt vom Typ des Oxydationsmittels ab.

Wenn Rohdolomit und Metallkarbonate als Oxydationsmittel verwendet werden, soll das Verhältnis zwischen dem Oxydationsmittel und dem Reduktionsmittel in einer strengen Übereinstimmung mit der obengenannten stöchiometrischen Gleichung der Reaktion des Brennens sein.Eine Abweichung von stöchiometrischen Verhältnis ist unzulässig, weil ein Überschuss an Oxydationsmittel zur Gasentwicklung und zur Erhöhung der Porosität führt, und der Unterschuss an demselben zum aktiven Restmetall im Feuerfeststoff führt. In beiden Fällen sinkt die Qualität des Feuerfeststoffes: Festigkeit und Verschlackungsbeständigkeit. Es soll bemerkt werden, dass das Massenverhältnis des Reduktionsmittels und des Oxydationsmittels im Bereich von 6-20:20-70 liegt. Bei Verwendung von Chromit und von Metallsulfaten als Oxydationsmittel wird ihr Verhältnis zum Reduktionsmittel experimentell in Abhängigkeit von den Bedingungen der Reaktion des Brennens und von der Herstellung eines Feuerfeststoffes mit vorgegebenen Eigenschaften gewählt, wobei dieses Verhältnis in dem obengenannten Bereich liegt.

Beim Brennen des exothermen Gemenges hat die Umsetzung seiner Komponenten, das heisst der Übergang zu einer keramischen Bindung zwischen den Teilchen, einen grundsätzlich anderen Charakter. Das Brennen erfolgt faktisch nach der aktiven Phase des Gemenges (Reduktionsmittel-Oxydationsmittel)in den Zwischenräumen zwischen den Teilchen des feuerfesten Füllmittels. Beim Brennen entwickeln sich lokal hohe Temperaturwerte von 1700 bis 2000°C, die die Synthese des Feuerfeststoffes mit einer Struktur gewährleisten, die durch chemische und Diffusionsumsetzung der Komponenten der aktiven Phase des Gemenges miteinander und mit der Oberfläche der Teilchen des Füllmittels ausgebildet wird. Hierdurch verfestigen die während des Brennens synthetisierten feuerfesten Phasen die Teilchen des Füllmittels fest zu einem Einheitskörper des Feuerfeststoffes mittels keramischer Bindung. Der Grad der

Ausbildung der keramischen Bindung ist bei dem erfindungsgemässen Material bedeutend höher als bei einem Feuerfeststoff, der im konventionellen Sinterverfahren hergestellt wird.

Deshalb zeichnet sich der Feuerfeststoff, erfindungsgemäss, durch hohe Kenndaten der physikalisch-mechanischen Eigenschaften wie Feuerfestigkeit und chemische Beständigkeit aus.

Das Brennen erfolgt durch lokales Anzünden an beliebiger Stelle des exothermen Gemenges mit einer elektrischen Glühspirale, einem elektrischen Funken, einem Lichtbogen oder einem Laserstrahl, oder durch Selbstentzündung bei der Erhitzung des Gemenges auf eine Temperatur von 900 bis 1000°C. Die lineare Geschwindigkeit der Brennfront beträgt 1 bis 1,5 mm/s, deshalb übersteigt die Ausbildung eines Feuerfeststoffes in Form, beispielsweise, eines Auskleidungsüberzuges nicht 5 bis 10 Minuten. Die Prozessführung im Brennbetrieb gewährleistet ihre Effektivität, grosse Leistung und geringen Stromverbrauch.

Für die Verwendung des vorgeschlagenen Materials als Elemente einer Auskleidung ist es vorteilhaft, das exotherme Gemenge vorher mit Wasser zu vermischen, das in einer Menge von 2 bis 12%, bezogen auf seine Gesamtmasse, genommen wird. In diesem Fall werden besonders günstige Bedingungen für die Formbarkeit des exothermen Gemenges sowie für seine Verwendung als Stampfmasse, Beton, Streichmasse, Futtermörtel und Steinmasse gewährleistet. Es ist vorteilhaft für die Ausbildung eines Feuerfeststoffes, der im CO-Medium, in der Schlacke aus der Stahlproduktion und im Zementklinker chemisch beständig ist, ein exothermes Gemenge zuzubereiten, das zusätzlich Lignosulfonat enthält und folgende Zusammensetzung (Masse%) aufweist:

| | |
|---|---|
| Titan | 8 bis 6 |
| Alumosilikat | 10 bis 40 |
| Lignosulfonat | 0,2 bis 5 |
| Chromit | bis zur Auffüllung auf 100, |

und mit Wasser in einer Menge von 6 bis 12% bezogen auf seine Gesamtmasse, vermischt wird. In diesem Fall wird die anfallende feuerfeste Masse in Form von Futtermörteloder Streichmasse verwendet.

Beim Brennen wird der Feuerfeststoff, erfindungsgemäss, in Form einer Verbindungsfuge, die die Steine zum Monolith schweisst oder in Form eines Auskleidungsüberzuges für Zement- und Stahlschmelzöfen und Stahlgiesspfannen geformt.

Bei einem Gehalt an Titan unter 8 Masse% lässt sich das exotherme Gemenge nicht entzünden und brennt nicht, und bei einem Gehalt an demselben über 16 Masse% schmilzt das Gemenge beim Brennen. In beiden Fällen verschlechtert sich die Qualität des Feuerfeststoffes stark.

Bei einem Gehalt an Alumosilikat unter 10 Masse% verringert sich die Verschlackungsbeständigkeit des Materials, bei einem Gehalt über 40 Masse% wird das Entzünden und Brennen des Gemenges nicht möglich, was auch zur Verschlechterung der Qualität des Feuerfeststoffes führt.

Die Menge an Lignosulfonat, das die Rolle eines Bindemittels erfüllt, wird durch die erforderliche Adhäsion des Futtermörtels oder der Streichmasse mit der zu bearbeitenden Oberfläche bestimmt, was sich auf die Festigkeit des herzustellenden Feuerfeststoffes auswirkt.

Der Gehalt an Chromit wird durch die Festigkeitseigenschaften des Feuerfeststoffes und durch die Adhäsion der Fuge oder der Streichmasse mit der zu bearbeitenden Oberfläche bestimmt.

Experimente zeigten, dass die Entzündbarkeit und die Beständigkeit des Brennen eines exothermen Gemenges bei Verwendung von Aluminium als Reduktionsmittel bei der Einführung von Kalium-, Natrium, Kupfer(II)-, Kalzium -,Eisen(III)- und Aluminiumfluorid als Katalysator in dasselbe wesentlich erhöht werden. Die Wirkung der Fluoride beruht offensichtlich auf der Zerstörung des Aluminiumfilmes, der seine Umsetzung mit dem Oxydationsmittel verhindert. Die Fluoride sind in ihrer Wirkung ungefähr gleich, ihre Menge wurde experimentell gewählt. Bei einem Gehalt unter 1 Masse% wird keine Verbesserung der Entzündbarkeit und der Beständigkeit des Brennens beobachtet. Der Gehalt an Katalysator oberhalb von 5 Masse% ist nicht wünschenswert, weil dabei die Festigkeit und Feuerfestigkeit des herzustellenden Materials sinken.

Bei einer trockenen Einlegung von Steinen auf Dolomitbeziehungsweise Periklasgrundlage eines Stahlkonverters oder einer Stahlgiesspfanne ist es vorteilhaft, ein exothermes Gemenge folgender Zusammensetzung (Masse%) zu verwenden:

| | |
|---|---|
| Aluminium | 12 bis 20 |
| Rohdolomit | 45 bis 70 |
| Kalziumfluorid | 1 bis 5 |
| Periklas | bis zur Auffüllung auf 100. |

Der in Form einer Fuge entstehende Feuerfeststoff weist Kennziffern der Feuerfestigkeit und der chemischen Beständigkeit gegenüber Schlacken und Flüssigmetall im grossen und ganzen analog den Kennziffern für Auskleidungssteine auf. In diesem Fall vergrössert sich die Standzeit der jeweiligen Auskleidung um 30 bis 40%.

Bei einem Gehalt an Aluminium und Rohdolomit unter 12 Masse% bzw. unter 45 Masse% ist das Gemenge zum Brennen nicht fähig; bei einem Gehalt an Aluminium und Rohdolomit oberhalb von 20 Masse% bzw. 70 Masse% schmilzt das Gemenge beim Brennen, was zu einer starken Verschlechterung der Qualität des herzustellenden Feuerfeststoffes in Bezug auf seine Festigkeitseigenschaften führt. Der quantitative Gehalt an Fluorid und Periklas wird durch den Charakter des Verlaufs der Brennführung bestimmt.

Für die Herstellung eines Feuerfeststoffes in Form einer Fuge mit hohen Festigkeitskenndaten und hoher Feuerfestigkeit ist es vorteilhaft, ein exothermes Gemenge folgender Zusammensetzung (Masse%) zu verwenden:

| | |
|---|---|
| Magnesium | 6 bis 15 |
| Eisen(III)oxid | 10 bis 20 |
| Kalziumsulfat | 9 bis 20 |
| Magnesiumkarbonat | 1 bis 15 |
| Aluminiumoxid | bis zur Auffüllung auf 100, |

und dieses mit Wasser in einer Menge von 6 bis 12%, bezogen auf seine Gesamtmasse, bis zur Entstehung eines Futtermörtels zu vermischen. Ein solcher Futtermörtel schweisst auf der Grundlage einer guten Adhäsion nach der Wärmebehandlung die Steine zu einem Monolith und gewährleistet der Auskleidung eine maximale Festigkeit; Es wird für die Auskleidung von Drehöfen, darunter von Zementöfen, sowie für die Ausmauerung von Zonen, die keinen Kontakt mit Metall und Schlacke der metallurgischen Ofen (Gewölben, Schieber und Deckel) haben, empfohlen.

Bei einem Gehalt an Magnesium, Eisen(III)oxid und Kalziumsulfat unter den angegebenen minimalen Mengen ist das Gemenge zum Brennen unfähig. Bei einem Gehalt an Magnesium oberhalb von 15 Masse% ist das Gemenge zum Entzünden bei Raumtemperatur fähig, was nicht wünschenswert ist.

Bei einem Gehalt an Eisenoxid oberhalb von 20 Masse% sinkt die Feuerfestigkeit; der Gehalt an Kalziumsulfat oberhalb von 20 Masse% verschlechtert die Festigkeitskenndaten des herzustellenden Feuerfeststoffes. Bei einem Gehalt an Magnesiumkarbonat unter 1 Masse% härtet die wässrige Lösung des Gemenges schnell aus, was seine Anwendung stark erschwert; bei einem Gehalt an demselben über 15 Masse% verliert der Feuerfeststoff seine Festigkeitskenndaten.

Die Wahl von Aluminiumoxid als Füllmittel und sein Anteil wird durch die maximale Steigerung der Festigkeitskenndaten einer Auskleidung bestimmt, da der Edelspinell $MgAl_2O_4$ entsteht.

Für eine sauerstoffreie Heisstorkretierung von Öfen und Heizkammern wird empfohlen, ein exothermes Gemenge folgender Zusammensetzung (in Masse%) zu verwenden:

```
Legierung des Aluminiums mit
Silizium bei einem Massenver-
hältnis 2:1                        9 bis 18

Magnesiumsulfat                   10 bis 25

Alumosilikat                      20 bis 45

Aluminiumfluorid             von 1 bis 3

Chromit                      bis zur Auffüllung auf 100,
```

das man der Wärmebehandlung im Brennbetrieb durch Aufspritzen auf die zu bearbeitende Oberfläche aussetzt, die auf eine Temperatur nicht unter 1000°C erhitzt wird, bei der die Selbstentzündung des Gemenges und die Ausbildung eines Auskleidungsüberzuges aus dem genannten Material erfolgen.

Bei einem Gehalt an der Legierung unter 9 Masse%, an Alumosilikat über 45 Masse%, an Magnesiumsulfat unter 10 Masse% und an Aluminiumfluorid unter 1 Masse% erfolgt kein Brennen des Gemenges.

Bei einem Gehalt an der Legierung über 18 Masse%, an Magnesiumsulfat über 25 Masse% überhitzt sich das beim Brennen entstehende Material und wird flüssig und kann wegfliessen.

Bei einem Gehalt an Alumosilikat unter 20 Masse% bzw. an Aluminiumfluorid über 3 Masse% verschlechtern sich entsprechend die Festigkeitskenndaten eines Feuerfeststoffes und seine Adhäsion zu der zu bearbeitenden Oberfläche.

Die Menge an Chromit wird durch die Bedingungen des Brennens des exothermen Gemenges bestimmt.

Es wird empfohlen, ein exothermes Gemenge folgender Zusammensetzung (in Masse%):

```
Zirkonium                    8 bis 15

Magnesiumkarbonat           45 bis 60

Lignosulfonat               0,2 bis 1,5

Aluminiumkarbid             12 bis 22,5

Titannitrid                 12,8 bis 23
```

mit Wasser in einer Menge von 2 bis 5%, bezogen auf seine Gesamtmasse, zu vermischen, die angefallene Masse in Form eines Auskleidungselementes zu formen und der Wärmebehandlung im Brennbetrieb auszusetzen.

Bei einem Gehalt an Zirkonium unter 8 Masse%, an Magnesiumkarbonat unter 45 Masse%, an Aluminiumkarbid über 22,5 Masse% und an Titannitrid über 23 Masse% ist das exotherme Gemenge zum Brennen unfähig.

Bei einem Gehalt an Zirkonium über 15 Masse%, an Magnesiumkarbonat über 60 Masse%, an Aluminiumkarbid unter 12 Masse% und an Titannitrid unter 12,8 Masse% schmilzt der Feuerfeststoff und verliert seine Form. Die Grenzmenge an Lignosulfonat und an Wasser werden durch die Formbarkeit der Stopfmasse und durch die Festigkeit des Feuerfeststoffes bestimmt, aus dem die Auskleidungselemente, beispielsweise, der Boden einer Stahlgiesspfanne, einer Stahlgiessrinne und Schlackenabstichrinne, ausgeführt sind.

Vorzugsweise soll die charakteristische Teilchengrösse des Oxydationsmittels und des Reduktionsmittels 10 bis 60 $\mu$m und des Füllmittels 0,01 bis 35 mm im exothermen Gemenge betragen.

Die charakteristischen (homogenisierten) Grössen von Teilchen des Reduktions- und Oxydationsmittels wurden experimentell gewählt. Wenn die charakteristische Teilchengrösse über 60 $\mu$m ist, wird das Entzünden und das Brennen des exothermen Gemenges stark erschwert beziehungsweise unmöglich. Wenn die charakteristische Teilchengrösse unter 10 $\mu$m ist, so nimmt die Porosität des Materials steil zu und es sinken demzufolge die Festigkeitskenndaten.

Wenn die charakteristische Teilchengrösse des Füllmittels unter 0,01 mm ist, weist das exotherme Gemenge eine niedrige Dichte auf, demzufolge wird ein hochporöses Material mit niedriger Festigkeit hergestellt, wenn die charakteristische Teilchengrösse über 35 mm ist, tritt die Neigung zur Rissbildung auf und die Wärmefestigkeit und andere Festigkeitskenndaten sinken.

Vorzugsweise soll das exotherme Gemenge bei seiner Verwendung in Verbindung mit Wasser in Form eines Futtermörtels, einer Stopfmasse und als Beton unter Bedingungen seiner lokalen Initiierung vorher bis auf eine Temperatur von 200 bis 600°C erhitzt werden, und die Wärmebehandlung soll bei atmosphärischem Druck erfolgen, was besonders günstige Bedingungen des Brennens gewährleistet und die Menge des Reduktionsmittels verringert.

Ausführungsformen der Erfindung

Ein Feuerfeststoff in Form einer Fuge der Auskleidung aus Kohlenstoffperiklasstein wird aus einem exothermen Gemenge folgender Zusammensetzung in Masse% zubereitet:

| | |
|---|---|
| Gemisch Al und Mg in Massenverhältnis 8:2 | 12 |
| Magnesit ($MgCO_3$) | 50 |
| Magnesiumsulfat | 4 |
| Bruch aus Kohlenstoff-periklasstein | 33,6 |
| Lignosulfonat | 0,4. |

Teilchengrösse der Komponenten unter 60 $\mu$m.

In einen Mischer werden trockene Komponenten aufgegeben und sorgfältig vermischt, wonach man Wasser in einer Menge von 5%, bezogen auf die Gesamtmenge des exothermen Gemenges, zusetzt und das Vermischen bis zum Anfallen einer homogenen Masse führt.

Diese Masse verwendet man in Form eines Futtermörtels für die Ausfütterung eines Stahlschmelzkonverters aus Kohlenstoffperiklasstein. Die Ausfütterung erfolgt mit einer Fugenstärke von 1 bis 3 mm. Untersuchungen zeigen, dass bei Verwendung eines dicken Mischgutes, wie in unserem Fall, das Wasser die Qualität der Steine nicht beeinflusst.

Die Fuge erhärtet innerhalb von 20 bis 30 Minuten bei Raumtemperatur.

Beim Anheizen des Konverters wird aus der Fuge das gebundene Wasser entfernt und die Masse verfestigt sich. Bei der Erreichung einer Temperatur von etwa 900°C an der Arbeitsoberfläche der Auskleidung entzündet sich die Masse von alleine, die Brennfront bewegt sich in die Tiefe der Fuge mit einer linearen Geschwindigkeit von 1,0 bis 1,5 mm/s und erreicht die Aussenseite der Auskleidung in 5 bis 10 Minuten, das heisst, dass die Umwandlung der Fugenmasse in das feuerfeste Material erfolgt. Den Brennprozess führt man bei atmosphärischem Druck. Die hergestellte Auskleidung ist fugenlos und zum Betrieb bereit. Nach Beendigung der Anheizung wird in den Konverter Gusseisen eingegossen.

Das feuerfeste Material der Fuge zeichnet sich durch eine Feuerfestigkeit über 2000°C, eine offene Porosität von 25%, eine Druckfestigkeit von 20 MPa, eine Zughaftfestigkeit der Steine von 1 MPa und eine Verschlackungsbeständigkeit gleich der von Kohlenstoffperiklasstein aus.

Der Betrieb der Auskleidung zeigt, dass keine Schlacke und kein Metall in die Fuge eindringt und der Charakter und der Grad des Verschleisses der Fuge und des Steines praktisch übereinstimmen. Die Anwendung der Erfindung ermöglicht es, die Standzeiten der Auskleidung von Konvertern und Stahlgiesspfannen um 30 bis 40% zu verlängern.

Nachstehend werden konkrete erfindungsgemäße Beispiele für die Herstellung eines feuerfesten Materials angeführt.

Beispiel I

Ein Feuerfeststoff für operative oder lokale Ausbesserung der Auskleidung von Brennkammern mit unterschiedlichem Bestimmungszweck wird aus einem exothermen Gemenge folgender Zusammensetzung in Masse% zubereitet:

| Magnesium | 6 |
| Eisen(III)oxid | 10 |
| Kalziumkarbonat | 9 |
| Aluminiumkarbonat | 1 |
| Siliziumoxid | 74. |

Die charakteristische Teilchengrösse des Magnesiums, der Kalziumkarbonate und des Aluminiums beträgt 60 $\mu$m, des Eisen(III)oxids 10 $\mu$m und des Siliziumoxids 1,5 mm.

Die Komponenten vermischt man, dann setzt man 6% Wasser, bezogen auf die Masse des exothermen Gemenges, zu und führt das Vermischen bis zum Anfallen einer homogenen Masse fort.

Bei einer lokalen Ausbesserung füllt man mit der hergestellten Masse, die als Streichmasse verwendet wird, die Hohlräume an den Stellen des Ausschmelzens der Auskleidung aus. Nach der Trocknung der Masse bei Raumtemperatur innerhalb von 2 bis 4 Stunden beginnt man die Anheizung der Brennkammer. Nach der Erreichung einer Temperatur an der Oberfläche der Auskleidung von etwa 900 bis 950°C entzündet sich die Streichmasse von alleine, die Brennfront versetzt sich mit einer Geschwindigkeit von 0,8 bis 1,2 mm/s. Der Brennprozess geht in 5 bis 10 Minuten zu Ende. Das feuerfeste Material, das an den Stellen des Ausschmelzens der Auskleidung entsteht, verbindet sich fest mit der Auskleidung. Es weist folgende Kenndaten auf: Feuerbeständigkeit 1670°C, Porosität 40%, Dichte 3 g/cm$^3$, Druckfestigkeit 38 MPa, Zughaftfestigkeit mit der Oberfläche des Alumosilikatsteines 3,2 MPa und thermischer Dehnungskoeffizient $0,7 \cdot 10^{-7} K^{-1}$.

Die Verwendung einer solchen Zusammensetzung für die operative und lokale Ausbesserung von Brennkammern, die mit Alumosilikatsteinen ausgefüttert sind, verlängert die Standzeit von Auskleidungen (wo man für analoge Zwecke wässrige Lösung eines hochtonerdehaltigen Zement mit einem Alumosilikat-Füllmittel verwendet) um 20 bis 40%.

Gemäß den Beispielen 2 bis 8 erfolgt die Herstellung des feuerfesten Materials in Form einer Verbindungsfuge der Auskleidung wie in Beispiel I.

In Beispiel 4 wird als feuerfester Bruch der Bruch von Mullitstein eingesetzt.

In der Tabelle I sind die Ausgangs- und die Korngrössenzusammensetzungen von exothermen Gemengen in Verbindung mit Wasser, die als Futtermörtel verwendet werden und in Tabelle 2 die Eigenschaftskenndaten der getrockneten Fugenmasse einer Auskleidung vor der Wärmebehandlung und des feuerfesten Materials dieser Fuge angeführt.

Beispiel 9

Ein Feuerfeststoff in Form einer Auskleidung wird aus einem exothermen Gemenge folgender Zusammensetzung in Masse% zubereitet:

| Aluminium | 12 |
| Dolomit | 45 |
| Periklas | 38 |
| Kalziumfluorid | 5. |

Die charakteristische Teilchengrösse des Aluminiums und des Kalziumfluorids beträgt 45 $\mu$m, des Dolomits 30 $\mu$m und des Periklas 1 mm.

Die trockenen Komponenten vermischt man, wonach man das exotherme Gemenge zwischen Steine aus Teerdolomit beziehungsweise aus Kohlenstoffperiklas bei Ausfütterung eines Stahlschmelzkonverters einschüttet. Die Fugenstärke beträgt 1 bis 3 mm, das Selbstentzünden des exothermen Gemenges in der Fuge erfolgt beim

Anheizen der Arbeitsfläche der Auskleidung bis auf eine Temperatur von 900 bis 950°C. Die Verbrennungsfront weist eine lineare Geschwindigkeit von 1,4 bis 1,7 mm/s auf und durchläuft die Fuge von der Arbeitsfläche bis zur Aussenoberfläche der Auskleidung innerhalb von 5 bis 10 Minuten. Den Brennprozess führt man bei atmosphärischem Druck. Das feuerfeste Material der Fuge weist folgende Kenndaten auf: Feuerfestigkeit 1950°C, Porosität 42%, Dichte 2,9 g/cm³, Druckfestigkeit 42 MPa, Zughaftfestigkeit der Steine 1,1 MPa, thermischer Ausdehnungskoeffizient $0,45 \cdot 10^{-7} K^{-1}$.

Die Verwendung einer solchen Zusammensetzung für die Ausfütterung eines Stahlschmelzkonverters mit Teerdolomitstein verlängert die Standzeit einer Auskleidung (gegenüber dem Ausmauern mit Chromitperiklaspulver geführt wird) um 20%. Gemäß den Beispielen 10 und 11 erfolgt die Herstellung des feuerfesten Materials in Form einer Verbindungsfuge der Auskleidung wie in Beispiel 9.

In Beispiel 10 wird als kohlenstoffhaltige Komponente Graphit verwendet.

Zu den Beispielen 10 und 11 sind in der Tabelle I die Ausgangs- und Korngrössenzusammensetzungen des exothermen Gemenges und in Tabelle 2 die Kenndaten der Eigenschaften des feuerfesten Materials der Auskleidung angeführt.

Beispiel 12

Ein feuerfestes Material in Form eines Auskleidungsüberzuges wird aus einem exothermen Gemenge folgender Zusammensetzung in Masse% zubereitet:

| | |
|---|---|
| Silizium, eine Legierung aus Aluminium mit Silizium bei ihrem Massenverhältnis 2:1 | 18 |
| Alumosilikat | 45 |
| Magnesiumsulfat | 10 |
| Chromit | 26 |
| Aluminiumfluorid | 1, |

die Teilchengrösse der Legierung aus Aluminium mit Silizium, des Alumosilikats und des Magnesiumsulfats beträgt 20 $\mu$m und die Teilchengrösse des Chromits und Aluminiumfluorids 10 $\mu$m.

Die Komponenten werden bis zum Anfallen eines homogenen exothermen Gemenges vermischt, das man auf eine nicht unter 1000°C erhitzte Auskleidungsoberfläche aufspritzt, wo sich das Gemenge entzündet und beim Verbrennen schmilzt und an der Auskleidung anhaftet. Das Aufspritzen erfolgt mit einer Torkretiermaschine unter Verwendung eines beliebigen Trägergases. Der Feuerfeststoff weist folgende Kenndaten auf: Feuerfestigkeit 1750°C, Porosität 23%, Dichte 3,3 g/cm³, Druckfestigkeit 90 MPa.

Er wird für den Anwurf metallurgischer Ofen und Wärmeaggregate, insbesondere von Stahlgiesspfannen und Siemens-Martin-Öfen empfohlen.

Die Anwendung der Erfindung für das Torkretieren von Auskleidungen einer Stahlgiesspfanne im Vergleich zur Technologie des Fackeltorkretierens (wo das Brennen im Gemisch eines Chromitperiklaspulvers mit Koks in einem Sauerstoffstrom erfolgt) vergrössert die Standzeit der Auskleidung um 25%. Gemäß den Beispielen 13 bis 15 erfolgt die Herstellung eines Auskleidungsüberzuges wie in Beispiel 12.

In Beispiel 15 wird als feuerfester Bruch Schamottestein verwendet.

Zu den Beispielen 13 und 15 sind in Tabelle I die Ausgangs- und Korngrössenzusammensetzungen des exothermen Gemenges und in Tabelle 2 die Kenndaten der technologischen Prozessführung sowie die Kenndaten der Eigenschaften des Auskleidungsüberzuges angeführt.

Beispiel 16

Für die Herstellung einer fugenlosen Auskleidung von Verschlusschiebern der Beschickungstüren von Siemens-Martin-Öfen wird ein exothermes Gemenge folgender Zusammensetzung in Masse% zubereitet:

| | |
|---|---|
| Aluminium | 6 |
| Eisen(III)oxid | 10 |
| Magnesiumsulfat | 10 |
| Bruch von Chromit-periklasstein | 70,5 |
| Kalziumfluorid | 3 |
| Lignosulfonat | 0,5. |

Die charakteristische Teilchengrösse von Aluminium beträgt 45 $\mu$m, des Eisenoxids und Magnesiumsulfats 40 $\mu$m, der Bruch von Chromitperiklasstein setzt sich aus zwei Fraktionen zusammen: Teilchen mit einer charakteristischer Grösse von 35 mm = 60 Masse% und von 3,5 mm = 40 Masse%.

Die trockenen Komponenten des exothermen Gemenges werden in einen Mischer aufgegeben und sorgfältig vermischt, wonach man dem exothermen Gemenge Wasser in einer Menge von 4%, bezogen auf seine Gesamtmasse, zusetzt. Mit der hergestellten Masse, Beton, füllt man den Innenraum des jeweiligen Verschlusschiebers, der in Form eines Metalleinsatzkastens ausgeführt ist, aus und verdichtet dieselbe. Nach der Trocknung bei Raumtemperatur innerhalb von 10 bis 15 Stunden wird der Verschlusschieber an einem Siemens-Martin-Ofen aufgestellt.

Unter den Arbeitsbedingungen des Verschlusschiebers wird die Masse erhitzt und bei Erreichung einer Temperatur von etwa 900°C entzündet sie sich. Da das Metallgehäuse des Verschlusschiebers mit Wasser gekühlt wird, erfolgt kein Ausschmelzen oder Schmelzen von Metalleinzelteilen des Verschlusschiebers beim Brennen der Masse.

Die lineare Geschwindigkeit der Brennfront der feuerfesten Masse beträgt 1,3 bis 1,8 mm/s, hierdurch erfolgt ihre Wärmebehandlung unter den Arbeitsbedingungen des Verschlusschiebers innerhalb von 5 bis 10 Minuten.

Der dadurch synthetisierte Feuerfeststoff weist eine Feuerfestigkeit von 1850°C, eine Porosität von 26%,eine Dichte von 3,3 g/cm³ und eine Druckfestigkeit von 40 MPa auf.

Die Anwendung des feuerfesten Materials als Auskleidung von Verschlusschiebern eines Martin-Ofens vergrösserte seine Standzeit im Vergleich zur Auskleidung aus dem üblichen feuerfesten Beton (Chromitperiklasmörtel auf der Grundlage eines Phosphatbindemittels) auf das 4fache.

Dieser feuerfeste Beton wird zur Verwendung bei der Fertigung von Baugruppen zur Auskleidung von Öfen und Aggregaten in der Schwarz- und Buntmetallurgie in den Zonen ausserhalb des direkten Kontaktes mit Schlacken und flüssigem Metall und für Drehöfen der Zement- und Tonerdeproduktion empfohlen. Gemäß den Beispielen 17 bis 20 erfolgt die Herstellung einer fugenlosen Auskleidung von Hochtemperaturaggregaten wie in Beispiel 16.

In Beispiel 20 wird als kohlenstoffhaltige Komponente Koks verwendet.

Zu den Beispielen 17 bis 20 sind in der Tabelle I die Ausgangs- und Korngrössenzusammensetzungen von in Form von Beton eingesetzten exothermen Gemengen in Verbindung mit Wasser und in Tabelle 2 die Kenndaten der getrockneten Futtermasse vor der Wärmebehandlung und des feuerfesten Materials dieser Auskleidung aufgeführt.

Tabelle I

Lfd. Nr. — Ausgangskomponenten des exothermen Gemenges, Masse%

| Lfd. Nr. | Reduktionsmittel Masse% | | | | | | | | | | Oxydationsmittel, Masse% — Sulfat | | | | | | Karbonat | | | | | |
|---|---|---|---|---|---|---|---|---|---|---|---|---|---|---|---|---|---|---|---|---|---|---|
| | Mg | Al | Zr | Si | Ti | Legierung | Rohdolomit | Chromit | Eisen(III)oxid | Alumosilikat | Mg | Ca | Sr | Ba | Zn | Al | Mg | Ca | Sr | Ba | Zn | Al |
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 2 | 12 | | | | | | | | | | | | 15 | 12 | | | 5 | | | | | |
| 3 | 6 | 8 | | | | | | | | | | | | | 5 | | | | | 56 | | |
| 4 | | 6 | | 7 | | | | | | | | | 15 | | 10 | | | | | | 20 | |
| 5 | | | | | 8 | | | | | 40 | | | | | | | | | | | | |
| 6 | | | | | 16 | | | | | 10 | | | | | | | | | | | | |
| 7 | 7 | | | | | | | | 20 | | | 9 | | | | | 15 | | | | | |
| 8 | 15 | | | | | | | | 10 | | | 20 | | | | | 1 | | | | | |
| 10 | | 15 | | | | | 60 | | | | | | | | | | | | | | | |
| 11 | | 20 | | | | | 70 | | | | | | | | | | | | | | | |
| 13 | | | | | | Al-6 | | | | | 20 | 25 | | | | | | | | | | |
| 14 | | | 15 | | | Si-3 | | | | | | | | | | | 40 | | | | | |
| 15 | | | 14 | | | | | | 40 | 17 | | 10 | | | | | | | | | | |
| 17 | | | | 8 | | | | | | | | | | | | | 45 | | | | | |

EP 0 426 848 A1

Fortsetzung der Tabelle I

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|
| 18 |  | 15 |  |  |  |  |  |  |  |  |  |  |  |  |  |  | 60 |  |  |  |  |  |
| 19 | 10 |  |  |  |  |  | 26 | 10 |  |  |  |  |  | 10 |  |  |  |  |  |  |  | 10 |
| 20 | 8 |  |  |  |  |  |  |  |  |  |  |  | 10 |  |  |  |  |  | 39,5 |  |  |  |

EP 0 426 848 A1

| Lfd. Nr. | Füllmittel, Masse% | | | | | | | | | | | Lignosulfat, Masse% | Fluorid, Masse% | | | | | | Gehalt an Wasser in %, bezogen auf die Gesamtmasse des exothermen Gemenges |
| --- | --- | --- | --- | --- | --- | --- | --- | --- | --- | --- | --- | --- | --- | --- | --- | --- | --- | --- | --- |
| | Periklas | Chromit | feuerfester Bruch | kohlenstoffhaltige Komponenten | feuerfestes Oxid | Karbid Al | Si | Ti | Nitrid Al | Si | Ti | | K | Na | Cu (II) | Ca | Fe (III) | Si | |
| 1 | 24 | 25 | 26 | 27 | 28 | 29 | 30 | 31 | 32 | 33 | 34 | 35 | 36 | 37 | 38 | 39 | 40 | 41 | 42 |
| 2 | | 56 | | | | | | | | | | | | | | | | | 8 |
| 3 | | | | | | | | 23 | | | | | | 2 | | | | | 7 |
| 4 | | | 26,8 | | | | | | | | | 0,2 | | | | 5 | | | 12 |
| 5 | | | 51,8 | | | | | | | | | 0,2 | | | | | | | 6 |
| 6 | | | 69 | | | | | | | | | 5 | | | | | | | 12 |
| 7 | | | | | $Al_2O_3$ 49 | | | | | | | | | | | | | | 8 |
| 8 | | | | | $Cr_2O_3$ 54 | | | | | | | | | | | | | | 12 |
| 10 | | | 24 | | | | | | | | | 1 | | | | | | | - |
| 11 | 9 | | | | | | | | | | | | | 1 | | | | | - |
| 13 | | 43 | | | | | | | | | | | | | | | 3 | | - |
| 14 | | | | | | | | | 45 | | | | | | | | | | - |
| 15 | | | 16 | | | | | | | | | | | | | | 3 | | - |
| 17 | | | | | | 22,5 | | | | 23 | 1,5 | | | | | | | | 5 |
| 18 | | | | | | 12 | | | | 12,8 | 0,2 | | | | | | | | 2 |
| 19 | | | | | | | | | 12 | 15 | | 3 | | | | 4 | | | 7 |
| 20 | 37 | | 5 | | | | | | | | | 0,5 | | | | | | | 4 |

| Lfd. Nr. | Korngrössenzusammensetzung des exothermen Gemenges | | | |
|---|---|---|---|---|
| | Teilchengrösse des Reduktionsmittels, $\mu$m | Teilchengrösse des Oxydationsmittels, $\mu$m | Teilchengrösse des Füllmittels, mm | Anmerkung |
| I | 43 | 44 | 45 | 46 |
| 2 | 60 | 60 | 0,6 | Futtermörtel |
| 3 | 40 | 40 | 0,6 | Futtermörtel |
| 4 | 40 | 40 | 0,5 | Futtermörtel |
| 5 | 35 | 50 | 1,0 | Futtermörtel |
| 6 | 35 | 50 | 1,0 | Futtermörtel |
| 7 | 60 | 30 | 0,6 | Futtermörtel |
| 8 | 60 | 40 | 0,3 | Futtermörtel |
| IO | 10 | 10 | 0,5 | trockenes Pulver für Auskleidung |
| 11 | 30 | 20 | 0,5 | -"- |
| 13 | 20 | 20 | 0,01 | Torkretiermasse |
| 14 | 30 | 20 | 0,06 | Torkretiermasse |
| 15 | 40 | 30 | 0,03 | Torkretiermasse |
| 17 | 30 | 30 | 5 | Beton |
| 18 | 30 | 30 | 3 | -"- |
| 19 | 50 | 40 | 5 | -"- |
| 20 | 50 | 30 | 3,5 | -"- |

Beispiel 21

Ein feuerfestes Material in Form von Stein wird aus einem exothermen Gemenge folgender Zusammensetzung in Masse% zubereitet:

EP 0 426 848 A1

| Magnesium | 13 |
| Magnesiumkarbonat | 52 |
| Periklas | 34,9 |
| Lignosulfonat | 0,1. |

Die charakteristische Teilchengrösse des Magnesiums beträgt 50 $\mu$m, des Magnesiumskarbonats 40 $\mu$m und des Periklas 3 mm.

Die Komponenten des exothermen Gemenges werden vermischt, angefeuchtet mit Wasser in einer Menge von 2%, bezogen auf die Masse des exothermen Gemenges, die angefallene Masse wird in eine Steinform aufgegeben und unter einem Druck von 100 MPa gepresst.

Das hergestellte Erzeugnis wird bei Raumtemperatur innerhalb von 10 Stunden getrocknet und dann auf 200°C erhitzt, wonach man das Brennen in Luft durch die Anlegung eines Stromimpulses durch eine Wolframglühspirale initiiert. Die Brennfront verbreitet sich im Stein von der Stelle des Initiierens mit einer linearen Geschwindigkeit von 0,8 bis 1,2 mm/s. Die Dauer des Brennens wird durch die Abmessungen des Steines bestimmt. Nach Beendigung des Brennens ist der Stein für den Einsatz bereit.

Das Material des Steines weist folgende Kenndaten auf: Feuerfestigkeit 2600°C, Porosität 16%, Dichte 3,8 g/cm$^3$, Druckfestigkeit 50 MPa und thermische Dehnungskoeffizient $1,5 \cdot 10^{-7} K^{-1}$.

Industrielle Verwertbarkeit

Die Erfindung wird in der Schwarz-, Bunt- und Baustoffindustrie zum Einsatz kommen.

17

Tabelle 2

| Lfd. Nr. | Temperatur d. zu bearbeitenden Oberfläche beim Aufspritzen, °C | Getrocknete Masse d. Auskleidungselem. vor Warmebehandlung – Festigkeitsgrenze | | Festigkeitsgrenze | | Feuerfestigkeit des Materials d. Auskleidungselemente | | | |
|---|---|---|---|---|---|---|---|---|---|
| | | Druck-festig-keit, MPa | Zugfestig-keit, MPa | Druck-festig-keit, MPa | Zugfestig-keit, MPa | Feuer-festig-keit, °C | Porosi-tät, % | Dichte, g/cm³ | therm. Dehnungs-koeffizient $10^{-7}K^{-1}$ ·10 |
| 1 | 2 | 3 | 4 | 5 | 6 | 7 | 8 | 9 | 10 |
| 1 | | 10 | 0,6 | 45 | 3,8 | 1660 | 35 | 2,9 | 0,75 |
| 2 | | 2 | 0,2 | 15 | 0,8 | 1800 | 45 | 3,1 | |
| 3 | | 1,5 | 0,1 | 30 | 2,2 | 1750 | 41 | 3,2 | 1,1 |
| 4 | | 1,4 | 0,1 | 65 | 5,5 | 1800 | 30 | 3,2 | 1,3 |
| 5 | | 12 | 1,0 | 70 | 6,4 | 1800 | 29 | 3,1 | |
| 6 | | 6 | 0,5 | 45 | 3,4 | 1810 | 33 | 3,4 | |
| 7 | | 12 | 0,9 | 70 | 5,8 | 1820 | 34 | 2,8 | |
| 8 | | | | 10 | 0,7 | 1960 | 43 | 2,65 | 0,50 |
| 10 | | | | 11 | 0,8 | 1940 | 50 | 3,3 | 0,41 |
| 11 | | | | 85 | | 1750 | 23 | 3,1 | 1,0 |
| 13 | | | | 50 | | 2200 | 25 | 3,0 | 0,95 |
| 14 | | | | 25 | | 1650 | 28 | 3,2 | 0,8 |
| 15 | | | | 33 | | 1800 | 33 | 3,2 | |
| 17 | | | | 42 | | 1800 | 32 | 2,5 | |
| 18 | 1000 | 4 | | 45 | | 1700 | 42 | 2,9 | 0,8 |
| 19 | 1000 | 0,9 | | 32 | | 2300 | 45 | | |
| 20 | 1000 | 5 | | | | | | | |

## Ansprüche

1. Feuerfestes Material, dadurch **gekennzeichnet,** dass man ein exothermes Gemenge der Wärmebehandlung im Brennbetrieb aussetzt, das
   - ein Reduktionsmittel aus mindestens einem Metall , gewählt aus der Gruppe: Magnesium, Aluminium, Zirkonium, Silizium oder ihren Legierungen,
   - ein Oxydationsmittel , einzeln oder im Gemisch, aus Rohdolomit, Chromit, Sulfat, Karbonat eines Metalls, gewählt aus der Gruppe: Magnesium, Kalzium, Strontium, Barium, Zink, Aluminium,
- ein feuerfestes Füllmittel, einzeln
oder im Gemisch, aus Periklas, Chromit, feuerfestem Bruch, feuerfestem Oxid, kohlenstoffhaltige Komponente, Karbid und Nitrid eines Metalls, gewählt aus der Gruppe: Aluminium, Silizium, Titan, bei folgendem Verhältnis der Komponenten (Masse%) enthält:

```
Reduktionsmittel            6 bis 20
Oxydationsmittel           20 bis 70
feuerfestes Füllmittel bis zur Auffüllung auf 100,
```

2. Feuerfestes Material nach Anspruch 1, dadurch **gekennzeichnet,** dass man ein exothermes Gemenge verwendet, das zusätzlich als Oxydationsmittel Eisen(III)oxid oder Alumosilikat enthält.

3. Feuerfestes Material nach Anspruch 1 oder 2, dadurch **gekennzeichnet,** dass man das exotherme Gemenge vorher mit Wasser in einer Menge von 2 bis 12%, bezogen auf seine Gesamtmasse, vermischt.

4. Feuerfestes Material nach Anspruch 3, dadurch **gekennzeichnet,** dass man das exotherme Gemenge, das zusätzlich Lignosulfonat enthält und folgende Zusammensetzung (in Masse%) aufweist:

```
Titan              8 bis 16
Alumosilikat      10 bis 40
Lignosulfonat     0,2 bis 5
Chromit           bis zur Auffüllung auf 100,
```

vorher mit Wasser in einer Menge von 6 bis 12%, bezogen auf seine Gesamtmasse, vermischt.

5. Feuerfestes Material nach Anspruch 1, dadurch **gekennzeichnet,** dass man bei Verwendung von Aluminium als Reduktionsmittel in das exotherme Gemenge zusätzlich 1 bis 5 Masse% eines Fluorids eines Metalls einführt, gewählt aus der Gruppe: Kalium, Natrium, Kupfer(II), Kalzium, Eisen(III), Aluminium.

6. Feuerfestes Material nach Anspruch 5, dadurch **gekennzeichnet,** dass man ein exothermes Gemenge verwendet, das folgende Zusammensetzung (Masse%) aufweist:

```
Aluminium         12 bis 20
Rohdolomit        45 bis 70
Kalziumfluorid     1 bis 5
Periklas          bis zur Auffüllung auf 100.
```

7. Feuerfestes Material nach Anspruch 2, dadurch **gekennzeichnet,** dass man das exotherme Gemenge, das folgende Zusammensetzung (Masse%) aufweist:

| Magnesium | 6 bis 15 |
| Eisen(III)oxid | 10 bis 20 |
| Kalziumsulfat | 9 bis 20 |
| Magnesiumkarbonat | 1 bis 15, |
| Aluminiumoxid | bis zur Auffüllung auf 100 |

vorher mit Wasser in einer Menge von 6 bis 12%, bezogen auf seine Gesamtmasse, vermischt.

8. Feuerfestes Material nach Anspruch 1, dadurch **gekenzeichnet,** dass man das exotherme Gemenge folgender Zusammensetzung (Masse%):

| Legierung von Aluminium mit Silizium bei einem Massenverhältnis 2:1 | 9 bis 18 |
| Magnesiumsulfat | 10 bis 25 |
| Alumosilikat | 20 bis 45 |
| Aluminiumfluorid | 1 bis 3 |
| Chromit | bis zur Auffüllung auf 100 |

der Wärmebehandlung in Brennbetrieb mittels Aufspritzenauf die zu bearbeitende Oberfläche aussetzt, die auf eine Temperatur nicht unter 1000°C erhitzt wird, bei der die Selbstentzündung des Gemenges und die Herausbildung eines Auskleidungsüberzuges aus dem genannten Material erfolgt.

9. Feuerfestes Material nach Anspruch 3, dadurch **gekennzeichnet**, dass man das exotherme Gemenge folgender Zusammensetzung (Masse%):

| Zirkonium | 8 bis 15 |
| Magnesiumkarbonat | 45 bis 60 |
| Lignosulfonat | 0,2 bis 1,5 |
| Aluminiumkarbid | 12 bis 22,5 |
| Titannitrid | 12,8 bis 23 |

mit Wasser in einer Menge von 2 bis 5%, bezogen auf seine Gesamtmasse, vermischt, die angefallene Masse in Form eines Auskleidungselementes formt und der Wärmebehandlung im Brennbetrieb aussetzt.

10. Feurfestes Material nach einem der Ansprüche -9, dadurch **gekennzeichnet**, dass im exothermen Gemenge die charakteristische Teilchengrösse des Oxydations- und Reduktionsmittel 10 bis 60 $\mu$m und des Füllmittels 0,01 bis 35 mm beträgt.

11. Feuerfestes Material nach Anspruch 3, dadurch **gekennzeichnet,** dass man das exotherme Gemenge vor der Wärmebehandlung auf 200 bis 600°C erhitzt.

12. Feuerfestes Material nach einem der Ansprüche 1-11, dadurch **gekennzeichnet**, dass man die Wärmebehandlung des exothermen Gemenges im Brennbetrieb bei atmosphärischem Druck durchführt.

20

# INTERNATIONAL SEARCH REPORT

International Application No PCT/SU89/00118

**I. CLASSIFICATION OF SUBJECT MATTER** (if several classification symbols apply, indicate all) [6]

According to International Patent Classification (IPC) or to both National Classification and IPC

$IPC^5$: C04B 35/66, 35/68

**II. FIELDS SEARCHED**

| Minimum Documentation Searched [7] | |
|---|---|
| Classification System | Classification Symbols |
| $IPC^4$ | C04B 35/04, C04B 35/64 ÷ 35/68 |

| Documentation Searched other than Minimum Documentation to the Extent that such Documents are Included in the Fields Searched [8] |
|---|
| |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | US, A, 3666851 (CANADIAN PATENTS AND DEVELOPMENT LIMITED), 30 May 1972 (30.05.72), the abstract | 1,7 |
| A | US, A, 3252818 (THE DOW CHEMICAL COMPANY), 24 May 1966 (24.05.66), ːcolumn 2, lines 27-30, 40-53 | 1-3,5-9 |
| A | FR, A1, 2576592 (GLAVERBEL), 1 August 1986 (01.08.86), the claims<br>& BR, 8506188  FR, 2576592<br>  JP, 61275170  GB, 2170191<br>  US, 4792468  BE, 903711<br>  AT, 350185  DE, 3540887<br>  NL, 8503317 | 1,10 |
| A | SU, A1, 374252 (Kharkovsky politekhnichesky institut) 21 June 1973 (21.06.73) | 1,4 |
| A | WO, A1, 79/00214 (NORTON COMPANY), 19 April 1979 (19.04.79), the abstract | 1,4 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 19.December 1989 (19.12.89) | 18 January 1990 (18.01.90) |
| International Searching Authority | Signature of Authorized Officer |
| ISA/SU | |

Form PCT/ISA/210 (second sheet) (January 1985)